# DEMANDE DE BREVET EUROPEEN

(11) **EP 0 985 613 A1**
(43) Date de publication de la demande: **15.03.2000**
(21) Numéro de dépôt: 99402013.9
(22) Date de dépôt: 06.08.1999
(51) Int. Cl.: B65G 47/91, B65G 47/14, H01L 21/00

(54) **Dispositif de préhension**

(30) Priorité: 13.08.1998 FR 9810495
(71) Demandeur: Opema S.A., 91200 Athis-Mons (FR)
(72) Inventeur: Le Bricquer, Gérard, 78150 Le Chesnay (FR); Vezinet, Alain, 91200 Athis-Mons (FR)
(74) Mandataire: Boivin, Claude

(57) **Abrégé**

Dispositif de préhension comprenant une buse (5) reliée à une source d'aspiration (4).

La buse est montée coulissante avec jeu sur l'extrémité du tube d'aspiration (4) de sorte qu'entre le tube (4) et la buse (5) il se produit une variation de pression et un effet laminaire qui déterminent la position de la buse mobile (5) par rapport au tube (4). Des butées limitent la course de la buse vers l'intérieur et vers l'extérieur et les moyens (12-13) signalent que la buse occupe sa position extrême intérieure.

## Description

La présente invention a pour objet un dispositif de préhension par aspiration et concerne un dispositif de ce genre, qui signale automatiquement la saisie d'un objet.

Le dispositif selon l'invention qui comprend une buse reliée à une source d'aspiration, est caractérisé en ce que la buse est montée coulissante avec jeu sur l'extrémité du tube d'aspiration et en ce qu'il comprend des butées pour limiter la course de la buse vers l'intérieur et vers l'extérieur ainsi que des moyens pour signaler que la buse occupe sa position extrême intérieure.

Quand aucun objet n'est saisi par le dispositif selon l'invention, de l'air est aspiré de l'extérieur par le jeu existant entre le tube et la buse et, par effet laminaire, tend à déplacer vers l'extérieur la buse qui vient dans sa position de butée extérieure. Quand l'ouverture de la buse est obturée par un objet, même partiellement, cet objet est aspiré et entraîne vers l'intérieur la buse qui vient dans sa position extrême intérieure, ce qui signale la saisie d'un objet.

Dans un mode de réalisation particulier de l'invention, le dispositif comprend un corps cylindrique comportant une paroi transversale dans laquelle le tube d'aspiration est emmanché et contre laquelle la buse vient en butée quand elle se déplace vers l'intérieur.

Le dispositif de préhension selon l'invention peut être utilisé dans des domaines très variés, par exemple alimentaire, mécanique, électronique ou pharmaceutique.

On a décrit ci-après, à titre d'exemple non limitatif, un mode de réalisation du dispositif de maintien selon l'invention, avec référence aux dessins annexés dans lesquels :
La Figure 1 est une vue en coupe axiale du dispositif selon I-I de la Figure 2, la buse mobile étant en position basse,
La Figure 2 est une vue en coupe axiale du dispositif selon II-II de la Figure 1, la buse mobile étant en position haute.

Tel qu'il est représenté au dessin, le dispositif de préhension selon l'invention comprend un corps cylindrique 1 comportant une paroi transversale 2 qui délimite une chambre 3; dans cette paroi est emmanché un tube d'aspiration 4 destiné à être relié à une source d'aspiration, non représentée, et s'étendant dans la chambre.

Une buse 5 est montée mobile avec un jeu calibré 6 sur la partie du tube 4 s'étendant dans la chambre 3. Un joint circulaire en caoutchouc 7 est emmanché sur l'extrémité de la buse 5. Cette dernière comporte à son extrémité inférieure une gorge 8 dans laquelle est logé un ressort torique 9. Ce dernier permet à l'air d'entrer dans la chambre 3 et coopère avec un épaulement 10 interne du corps 1 pour empêcher la buse 5 de se séparer du tube 4.

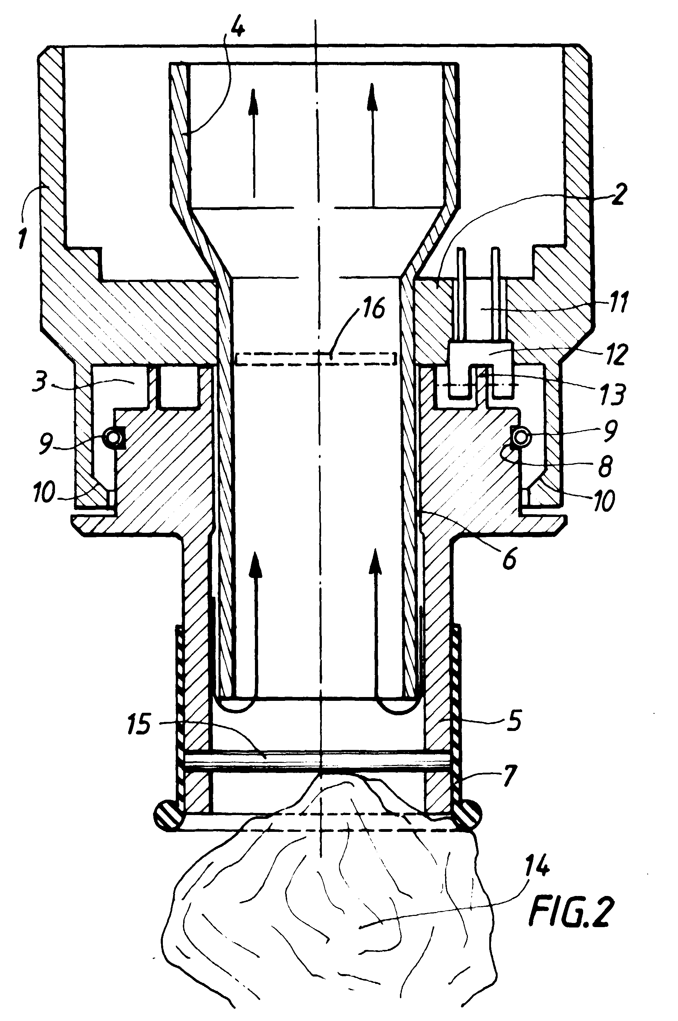

La cloison 2 comporte un évidement 11 dans lequel est logée une fourche optoélectronique 12 (Figure 2) faisant saillie dans la branche 3. La buse 5 présente sur sa face supérieure un disque annulaire 13 coupant le faisceau de la fourche 12 quand la buse est en position haute.

Un fil 15 est disposé transversalement dans l'extrémité de la buse 5 et limite la section de passage de cette buse. La chambre 3 comporte, à proximité de la cloison 2, une ouverture 16 débouchant à l'extérieur.

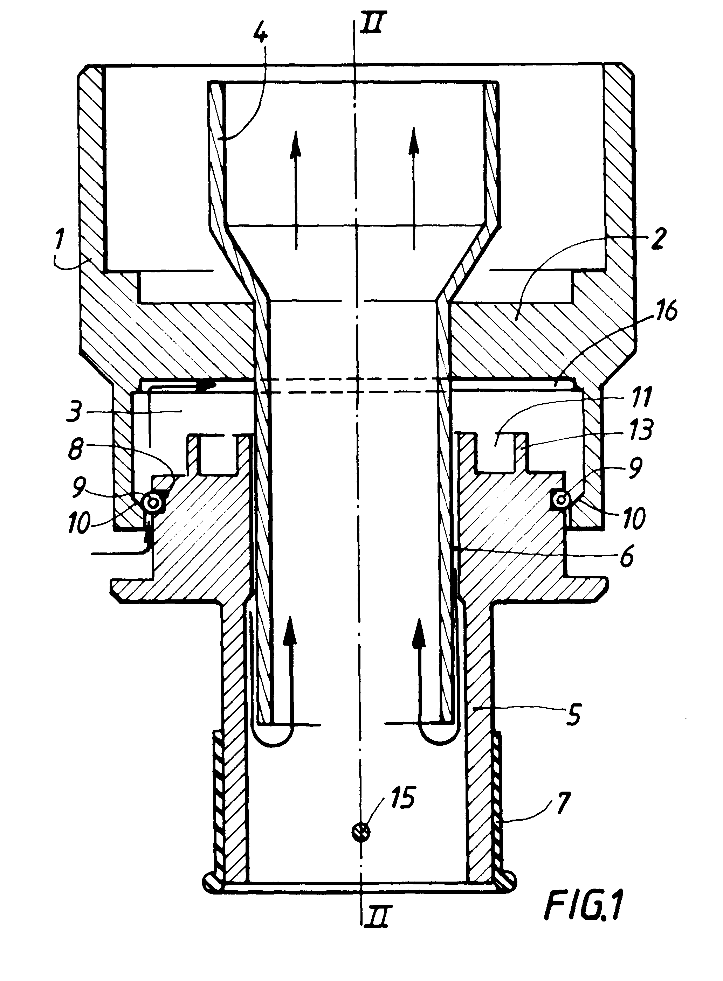

En fonctionnement, le tube 4 est relié à une source d'aspiration. Sous l'effet de la dépression,de l'air est aspiré de la chambre 3 et passe dans le jeu 6. Par effet laminaire, cet air tend à déplacer la buse 5 vers le bas par rapport au tube 4 qui est fixe et amène cette buse dans la position extrême extérieure de la Figure 1 dans laquelle le ressort 9 est au contact de l'épaulement 10; l'anneau 13 se trouve à l'extérieur de la fourche 12.

Quand un objet 14 obture, ne serait-ce que partiellement l'ouverture de la buse, cet objet tend à être aspiré dans le tube 4 et entraîne la buse 5 qui vient dans sa position extrême intérieure en butée contre la paroi 12. L'anneau 13 pénètre dans la fourche optoélectronique 12 (Figure 2), en signalant ainsi la saisie de l'objet 14.

Si la buse perd l'objet, par exemple par suite d'un choc ou de vibrations excessives, l'air pénêtre dans la chambre 3 par l'ouverture 16 et la buse revient dans sa position basse de la Figure 1.

Le fil 15 permet de saisir des objets relativement petits en les empêchant d'être aspirés dans le tube 4, tout en ne gênant pas le passage de l'air.

Il va de soi que la présente invention ne doit pas être considérée comme limitée au mode de réalisation décrit et représenté, mais en couvre, au contraire, toutes les variantes. C'est ainsi, par exemple qu'on pourrait prévoir des moyens élastiques tendant à amener la buse 5 dans sa position extrême intérieure. Dans ce cas, la buse occuperait cette position en l'absence d'aspiration, viendrait dans sa position extrême extérieure quand le tube 4 est relié à la source d'aspiration et reviendrait dans sa position extrême intérieure lors de la prise d'un objet.

## Revendications

1. Dispositif de préhension comprenant une buse (5) reliée à une source d'aspiration (4) et caractérisé en ce que la buse (5) est montée coulissante avec jeu sur l'extrémité du tube d'aspiration (4) de sorte qu'entre le tube (4) et la buse (5) il se produit une variation de pression et un effet laminaire qui déterminent la position de la buse mobile (5) par rapport au tube (4) et en ce qu'il comprend des butées pour limiter la course de la buse vers l'intérieur et vers l'extérieur ainsi que des moyens (12-13) pour signaler que la buse occupe sa position extrême intérieure.

2. Dispositif selon la revendication 1, caractérisé en ce qu'il comprend un corps cylindrique (1) comportant une paroi transversale (2) dans laquelle le tube d'aspiration (4) est emmanché et contre laquelle la buse (5) vient en butée quand elle se déplace vers l'intérieur.

3. Dispositif selon la revendication 2, caractérisé par un ressort torique (9) engagé dans une gorge (8) de la buse (5) et venant en butée contre un épaulement fixe (10) du corps (1) quand la buse (5) est dans sa position extrême extérieure.

4. Dispositif selon la revendication 2 ou 3, caractérisé par une fourche optoélectronique (12) portée par la paroi (2) et dans laquelle pénêtre un disque annulaire (13) de la buse (5) quand cette dernière est en position extrême intérieure.

5. Dispositif selon l'une quelconque des revendications précédentes, caractérisé en ce qu'un joint circulaire (7) est emmanché sur l'extrémité de la buse (5).

6. Dispositif selon l'une quelconque des revendications précédentes, caractérisé en ce qu'un fil (15) est disposé transversalement dans l'extrémité de la buse (5).
